# EUROPEAN PATENT SPECIFICATION

(11) **EP 0 408 563 B1**
(45) Date of publication and mention of the grant of the patent: **24.03.1993**
(21) Application number: 89901475.7
(22) Date of filing: 04.01.1989
(51) Int. Cl.: B25J 9/18, B05B 13/04

(54) **METHOD AND ROBOT SYSTEM FOR REPAIR PAINTING OF MOTORCARS**
VERFAHREN UND ROBOTERSYSTEM FÜR REPARATURLACKIERUNGEN VON KRAFTWAGEN
PROCEDE ET SYSTEME DE ROBOT SERVANT A EFFECTUER DES RETOUCHES DE PEINTURE SUR DES VOITURES AUTOMOBILES

(30) Priority: 05.01.1988 NO 880016
(43) Date of publication of application: 23.01.1991
(73) Proprietor: ABB TRALLFA ROBOT A/S, N-4341 Bryne (NO)
(72) Inventor: HETLAND, Amund, N-4063 Voll (NO); KJOSAVIK, Dag, N-4300 Sandnes (NO)
(74) Representative: Andrejewski, Walter
(86) International application number: NO8900003
(87) International publication number: WO8906181

(56) References cited:
- EP-A- 0 084 523
- EP-A- 0 192 338
- EP-A- 0 249 171
- DE-A- 3 102 779
- US-A- 4 714 044
- Asea Journal, n 5, issued 1987, Dag Kjosavik and Björn M. Apelanf, "Coating systems for the automotive industry". page 8-9.

## Description

The present invention is related to a method and mobile servo-operated robot system for repair painting of motorcars, an associated computer system being utilized for guiding a painting tool in accordance with programmed operational data stored in one or more data bases.

Robot systems are to a great extent used for the painting of motorcars in serial and mass production, in which the same preprogrammed operational data are utilized for the painting of each car belonging to the same production series. With repair painting due to damage or with repainting of cars, however, it has up to now not been practical or possible to utilize painting robots with all their advantages, as the painting operation evidently would be different in each case and the programming of new operational data for each repair painting would be time and work consuming.

Thus, it is an object of the present invention to provide a method and a robot system with associated computer means, which suitably may be utilized for repair painting without necessarily performing a new programming for each painting operation.

The invention then concerns a method for repair painting of motorcars by means of a mobile, servo-operated robot system with an associated computer system. for controlled guiding of painting tools in accordance with preprogrammed operational data which are stored in one or more data bases.

The unique features of this method according to the invention are that topical descriptive data related to the repair painting in question, e.g. type of car, year model, colour code and painting area, are supplied to said associated computer system, which then is actuated to search for corresponding operational data in its own data base and/or possibly in other remotely connected data bases, the preprogrammed operational data provided in this way being selected for the control of the robot system when performing the required repair painting, possibly subsequent to a modifying program editing in view of the prevailing operative conditions.

Prior to the initiation of the painting operation the robot system is preferably actuated to gauge the position of the area to be painted relative to said system, as a basis for said modifying program editing.

In order to facilitate said search of the computer system for preprogrammed operational data in the data bases, such data may suitably be programmed in the form of data modules, each module corresponding to an individually associated painting area on the type of motorcar in question.

The invention also comprises a movable servo-operates robot system for repair painting of motorcars and comprising an associated computer system operatively adapted for controlled guiding of painting tools in accordance with preprogrammed operational data, which are stored in one or more data bases. According to the invention the unique features of this robot system then reside in the facts that said computer system. further is operatively adapted, in response to supplies topical data describing the repair painting to be performed, e.g. type of car, year model, colour code and painting area, to search for corresponding operational data in its own data base and/or possibly in other, remotely connected data bases and to select the preprogrammed operational data provided in this way for controlling the robot system when performing said repair painting.

For the performance of such repair painting the robot system suitably comprises in practice a robot arm having seven axes of motion for guiding the painting tools, and a platform having an eighth axis of motion for manipulating the motorcar which is to be painted.

The invention will now be described in more detail by means of an exemplified embodiment with reference to the accompanying drawings, on which:
- Fig. 1: shows in plan view a robot system according to the invention with a car disposed for repair painting, and
- Fig. 2: shows in elevation the robot system in Fig. 1 with the components of the computer system and the robot control schematically illustrated.

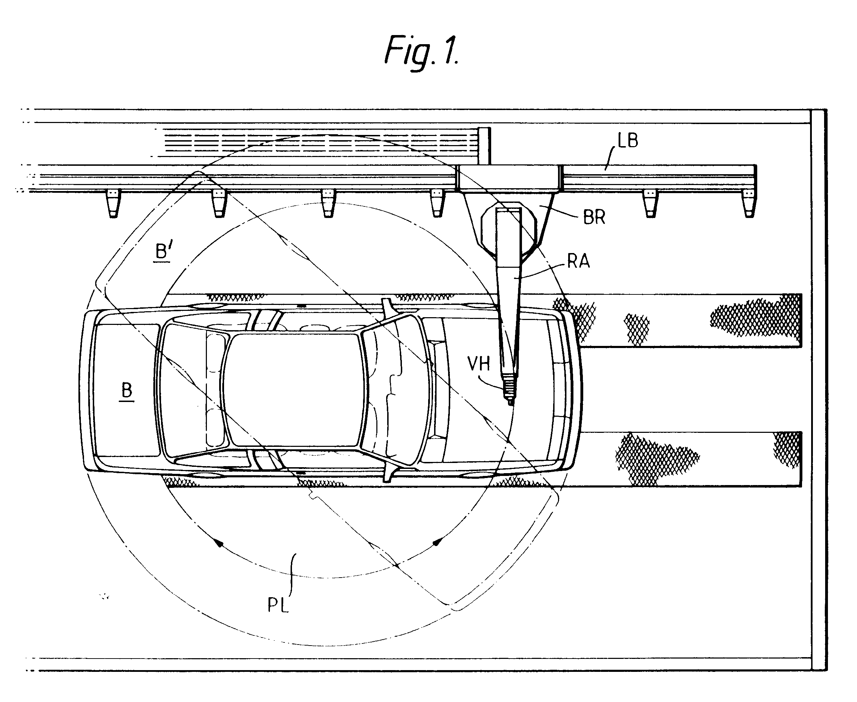

Fig. 1 illustrates in plan view a mobile servo system comprising a robot arm RA on a carrier BR, which is movable along a linear path of motion LB. The robot arm carries at its extreme end a tool socket VH, which is pivotable about three mutually orthogonal axes relative to the robot arm. The robot arm is in turn disposed for pivotal movements about three axes relative to the carrier BR, these three axes being also mutually orthogonal. The robot arm on its carrier is suitably disposed for movements along its linear path of motion in the vicinity of a pivotable platform PL for a car, which is to be repair painted and is shown in two pivotal positions, B and B′ respectively. Thus, the robot system comprises totally eight axes of motion, of which six are associated with the robot arm RA itself and its tool socket VH, one is utilized for displacement of the arm carrier BR along the linear path of motion in the vicinity of the car, and the eighth axis is used for pivoting the car in the horizontal plane to bring the car to an appropriate position relative to the robot system.

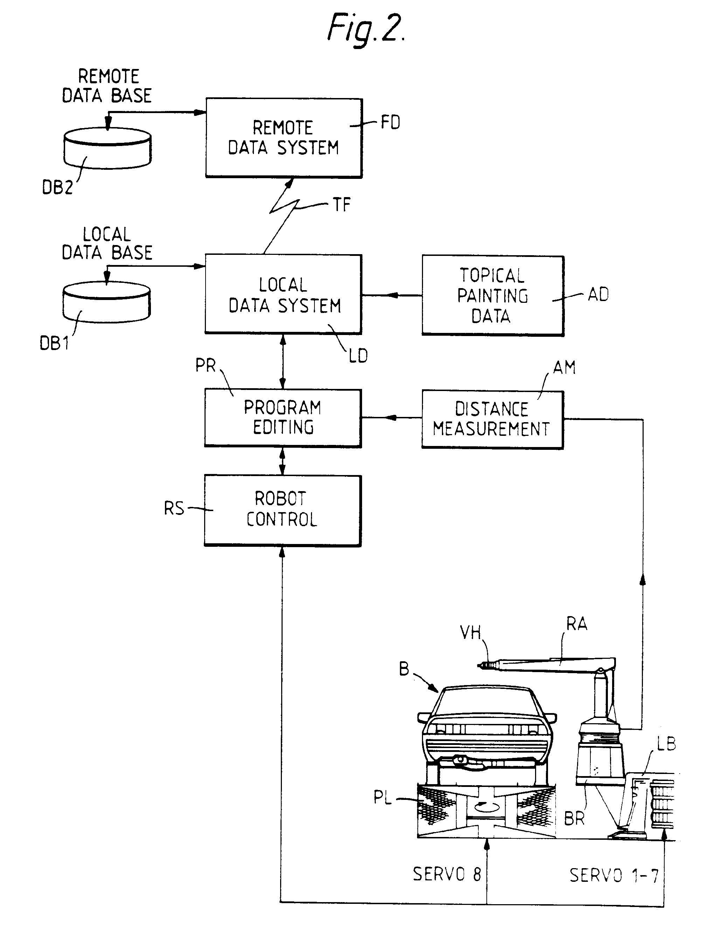

In Fig. 2 the robot system of Fig. 1 is shown together with the car B to be repair painted, the robot control and the associated computer system being shown schematically with their functional connections. The robot control and the local data computer means are not included in the present invention and may be of any suitable type, e.g. as described in Norwegian Patent Specification No. 131.906. At all times the robot control takes care of the servo regulation of the robot system in accordance with the data program which is present in the local computer system.

With conventional applications of painting robots the painting program is fixed and unchanged for a great number of identical painting operations, as it is the case with serial production. of motorcars.

With repair painting according to the present invention it is, however, necessary to find a new and suitable painting program in each single case, and for this purpose relevant painting data for the case in question is fed into the associated local data system LD. These painting data AD then indicates primarily the extension and location on the car of the area to be painted, but also the make and year model of the car and the appropriate colour code. The computer system LD then tries to find correspondingly programmed operational data in its local data base DB1, in which a number of painting programs for various makes of cars are stored. If it is not possible to find the desired operational data in this data base, the computer system LD will by means of telephone connections search for the required operational data in the data bases of other, remote data systems FD. The various major motor car producers may have e.g. painting data for all their car types and models stored in a particular data base for painting programs.

When the local computer system LD has found appropriate operational data, either in the associated data base DB1 or in one or more remote data bases DB2, these operational data are selected as a basis for the repair painting to be carried out, and are stored in a suitable data register in the local system until the painting process is initiated. A final program editing PR may suitably take place before the selected programmed data are supplied to the robot control RS. A graphic screen may then be used for displaying the painting area and its spraying paths. With this editing also the position of the car and the painting area in relation to the robot system is taken into account, on the basis of distance measurements performed by the robot arm of the system. Subsequent to the program editing the edited and selected painting program is transferred to the robot control RS, which takes care of the appropriate guiding of the painting tool by means of the various servo-mechanisms 1 - 7, 8, which are provided for the regulation of the movements of the robot system with respect to its different axes of motion.

During the search performed by the computer system for programmed operational painting data, the car and the painting area may be prepared for the painting process (cleaning, spackling, grinding etc.) The robot system may also suitably be used for additional tasks in connection with the painting proper, e.g. drying by means of infrared or ultraviolet light. In such cases the robot would manipulate other tools than a painting tool, and automatic change of tools may possibly be included in the painting program.

With utilization of the technically advanced painting robots which now are available, also for repair painting, many operational advantages are achieved, e.g. rapid, optimum and automatic use of all the painting information which is stored in the various data bases, as well as relieving human workers from work in a painting environment which is injurious to health.

## Claims

1. Method for repair painting of motorcars (B,B′) by means of a mobile, servo-operated robot system (VH,RA,LB,PL) with an associated computer system (LD) for controlled guiding of painting tools in accordance with operational data derived from one or more data bases containing data related to painting areas, colour codes, etc. for various types of cars, year models etc.
characterized in that topical descriptive data (AD) related to the repair painting in question are supplied to said associated computer system, which then is actuated to search in said data bases for corresponding operational data in the form of data modules containing individually associated painting programs for various painting areas for different types and year models of motorcars, the robot system being actuated to gauge the position of the area to be painted relative to said system and the searched-out data modules being modifyingly edited in view of said gauged relative position as well as prevailing operative conditions, and in order to adapt said data modules to the repair painting area in question.

2. Servo-operated robot system (VH,RA,LB,PL) for repair painting of motorcars (B,B′) and comprising an associated computer system (LD) operatively adapted for controlled guiding of painting tools in accordance with operational data derived from one or more data bases containing data related to painting areas, colour codes, etc. for various types of cars, year models, etc.,
characterized in that said computer system (LD) further is operatively adapted, in response to supplied topical descriptive data (AD) related to the repair painting in question, to search in said data bases for corresponding operational data in the form of data modules containing individually associated painting programs for various painting areas on different types and year models of motorcars, the robot system being further adapted to gauge the position of the area to be painted relative to said system, and the computer system comprising means (PR) for modifyingly editing the searched-out data modules in view of said gauged relative position as well as prevailing operative conditions, and in order to adapt said data modules to the repair painting area in question.

3. Servo-operated robot system as claimed in claim 2,
characterized in that said means (PR) for modifyingly editing the searched-out data modules comprises a graphic screen for displaying the painting area and its painting program.

## Patentansprüche

1. Verfahren zur Reparaturlackierung von Kraftwagen (B, B′) mittels eines beweglichen, servo-angetriebenen Robotersystems (VH, RA, LB, PL) mit einem angeschlossenen Computersystem (LD) zur gesteuerten Führung von Lackierwerkzeugen nach Arbeitsdaten, die von einer oder"von mehreren Datenbanken stammen, die Daten bezüglich Lackierflächen, Farbcodierungen etc. für verschiedene Wagentypen, Modelljahre etc. enthalten,
**dadurch gekennzeichnet**, daß aktuelle beschreibende Daten (AD), die mit der betreffenden Reparaturlackierung in Verbindung stehen, dem angeschlossenen Computersystem (LD) bereitgestellt werden, welches dann dazu gebracht wird, in den Datenbanken nach entsprechenden Arbeitsdaten in der Form von Daten-Modulen zu suchen, die einzelne, dazugehörende Lackierprogramme für verschiedene Lackierflächen von unterschiedlichen Typen und Modelljahren von Kraftwagen enthalten, daß das Robotersystem dazu gebracht wird, die Position der zu lackierenden Fläche relativ zum Robotersystem einzueichen, und daß die ausgesuchten Daten-Module im Hinblick auf die eingeeichte, relative Position, sowie hinsichtlich vorherrschender Arbeitsbedingungen modifizierend bearbeitet wird, und um die Daten-Module an die betreffende Reparaturlackierungsfläche anzupassen.

2. Servo-angetriebenes Robotersystem (VH, RA, LB, PL) zur Reparaturlackierung von Kraftwagen (B, Bl) mit einem angeschlossenen Computersystem (LD), das zur gesteuerten Führung von Lackierwerkzeugen nach entsprechenden Arbeitsdaten, die von einem oder von mehreren Datenbanken kommen, betriebswirksam eingerichtet ist, wobei die Datenbanken Daten bezüglich Lackierflächen, Farbcodierungen etc. für verschiedene Wagentypen, Modelljahre etc. enthalten,
**dadurch gekennzeichnet**, daß das Computersystem außerdem betriebswirksam eingerichtet ist als Antwort auf bereitgestellte, aktuelle beschreibende Daten (AD), die mit der betreffenden Reparaturlackierung in Verbindung stehen, in diesen Datenbanken nach entsprechenden Arbeitsdaten in der Form von Daten-Modulen zu suchen, die einzelne, dazugehörende Lackierprogramme für verschiedene Lackierflächen von unterschiedlichen Typen und Modelljahren von Kraftwagen enthalten, daß das Robotersystem außerdem dazu eingerichtet ist die Position der zu lackierenden Fläche relativ zum Robotersystem einzueichen, und daß das Computersystem Mittel zum modifizierenden Bearbeiten der ausgewählten Daten-Module im Hinblick auf die eingeeichte, relative Position, sowie hinsichtlich vorherrschender Arbeitsbedingungen besitzt und um die Daten-Module auf die betreffende Reparatur-Lackierfläche anzupassen.

3. Servo-angetriebenes Robotersystem nach Anspruch 2, dadurch gekennzeichnet, daß das Mittel (PR) zum modifizierenden Bearbeiten der ausgewählten Daten-Module einen graphischen Bildschirm zur Darstellung der Lackierfläche und seines Lackierprogrammes besitzt.

## Revendications

1. Procédé pour la peinture de réparation de véhicules automobiles (B, B′) au moyen d'un système de robot (VH, RA, LB, PL) mobile et à fonctionnement asservi avec un système informatique associé (LD) pour le guidage commandé d'outils de peinture conformément à des données de fonctionnement obtenues à partir d'une ou plusieurs bases de données contenant des données relatives aux zones de peinture, codes de couleur, etc ... pour différents types de voitures, années de fabrication, etc...,
caractérisé en ce que l'on fournit des données descriptives particulières (AD) concernant l'opération de peinture de réparation concernée audit système informatique qui est ensuite actionné pour chercher dans lesdites bases de données des données opérationnelles correspondantes sous la forme de modules de données contenant individuellement des programmes de peinture associés pour différentes zones de peinture, pour différents types et années de fabrication de véhicules, le système robot étant actionné en vue de mesurer la position de la zone devant être peinte par rapport audit système et les modules de données fournis par la recherche étant édités en modifiant en tenant compte de ladite position relative mesurée ainsi que des conditions opérationnelles existantes et en vue d'adapter lesdits modules de données à la zone de peinture de réparation concernée.

2. Système de robot à fonctionnement asservi (VH, RA, LB, PL) destiné à la peinture de réparation de véhicules automobiles (B, B′) comprenant un système informatique associé (LD) fonctionnellement adapté pour le guidage commandé d'outils de peinture conformément à des données opérationnelles obtenues à partir d'une ou plusieurs sources de données contenant des données relatives aux zones de peinture, aux codes de couleur, etc... pour différents types de véhicules, années de fabrication, etc...,
caractérisé en ce que ledit système informatique (LD) est en outre opérationnellement adapté, en réponse à des données particulières descriptives fournies (AD) relatives à l'opération de peinture de réparation concernée, pour rechercher dans lesdites bases de données des données opérationnelles correspondantes sous la forme de modules de données contenant individuellement des programmes de peinture associés pour différentes zones de peinture sur différents types et années de fabrication de véhicules, le système robot étant en outre adapté pour mesurer la position de la zone à peindre par rapport audit système et le système informatique comprenant des moyens (PR) pour éditer en modifiant les modules de données fournis par la recherche en tenant compte de ladite position relative mesurée ainsi que des conditions opérationnelles existantes et pour adapter lesdits modules de données à la zone de peinture de réparation concernée.

3. Système robot à fonctionnement asservi selon la revendication 2,
caractérisé en ce que lesdits moyens (PR) pour éditer en modifiant des modules de données fournis par la recherche comprennent un écran graphique pour afficher la zone de peinture et son programme de peinture.
